# EUROPÄISCHE PATENTANMELDUNG

(11) **EP 3 760 437 A1**
(43) Veröffentlichungstag der Anmeldung: **06.01.2021**
(21) Anmeldenummer: 20180658.5
(22) Anmeldetag: 18.06.2020
(51) Int. Cl.: B32B 27/10, B29C 51/00, B32B 1/02, B32B 7/023, B32B 7/06, B32B 7/12, B32B 27/08, B32B 29/00, B65D 65/40

(54) **DURCHSICHTIGER ODER ZUMINDEST KONTAKTTRANSPARENTER PAPIER-FOLIE-VERBUND UND DARAUS HERGESTELLTE VERPACKUNGEN**

(30) Priorität: 05.07.2019 DE 102019118304
(71) Anmelder: Buergofol GmbH, 93354 Siegenburg (DE)
(72) Erfinder: STARK, Kurt, 91284 Neuhaus a.d. Pegnitz (DE)
(74) Vertreter: Herrmann, Uwe

(57) **Zusammenfassung**

Die vorliegende Erfindung betrifft einen Papier-Folie-Verbund mit mindestens einer eine Folie umfassenden Schicht und einer mit dieser Schicht verbundenen, ein Papier umfassenden Schicht, wobei der Papier- Folie-Verbund durchsichtig oder zumindest kontakttransparent ist. Weiterhin betrifft die vorliegende Erfindung eine Verpackung aus einem derartigen durchsichtigen Papier-Folie-Verbund sowie Herstellungsverfahren für den Papier- Folie-Verbund und eine daraus gefertigte Verpackung.

## Beschreibung

### Technisches Gebiet

Die vorliegende Erfindung betrifft einen Verbund von Folie und Papier, der durchsichtig oder zumindest kontakttransparent ist. Aus einem derartigen Verbund sind im nächsten Schritt Verpackungen herstellbar, insbesondere Verpackungen für Lebensmittel.

Weiterhin betrifft die vorliegende Erfindung eine Verpackung bzw. ein Verpackungssystem mit einem Papier-Folie-Verbund, der als Oberteil der Verpackung verwendet wird, und/oder mit einem Papier-Folie-Verbund, der als Unterteil der Verpackung verwendet wird, wobei mindestens ein Papier-Folie-Verbund bzw. das Unterteil und / oder das Oberteil durchsichtig oder zumindest kontakttransparent ist und wobei mindestens ein Papier-Folie-Verbund, insbesondere der das Unterteil der Verpackung bildende Papier-Folie-Verbund tiefziehfähig ist, so dass eine Mulde geformt werden kann, in die das zu verpackende Gut bzw. Verpackungsgut gelegt werden kann.

Die vorliegende Erfindung betrifft aber auch eine Verpackung bzw. ein Verpackungssystem mit einem Papier-Folie-Verbund, der als Unterteil der Verpackung verwendet wird, wobei der Papier-Folie-Verbund bzw. das Unterteil durchsichtig oder zumindest kontakttransparent ist und der Papier-Folie-Verbund, der das Unterteil der Verpackung bildet, nicht tiefgezogen wird. In diesem Fall wird auf den erfindungsgemäßen Papier-Folie-Verbund, der das Unterteil der Verpackung darstellt, als Oberfolie eine Skin-Folie aufgebracht, die sich um das zu verpackende Produkt wie eine zweite Haut anlegt.

Statt dem Papier-Folie-Verbund kann entweder als Unterteil der Verpackung bzw. des Verpackungssystems oder als Oberteil der Verpackung bzw. des Verpackungssystems auch eine Mehrschichtfolie oder ein ausschließlich aus Kunststoff bestehender Verbund eingesetzt werden. Erfindungsgemäß besteht jedoch zumindest ein Teil der Verpackung aus einem durchsichtigen oder zumindest kontakttransparenten erfindungsgemäßen Papier-Folie-Verbund.

### Hintergrund der Erfindung

Verpackungen aus Kunststoff sind aus der modernen Welt kaum noch wegzudenken. Seit den 1950er-Jahren haben sich Kunststoffprodukte und insbesondere Kunststoffverpackungen am Markt bei den Verbrauchern durchgesetzt. Ein Hauptanwendungsgebiet von Kunststoffverpackungen ist hierbei die Verpackung von Lebensmitteln.

Heutzutage sind Schätzungen zufolge sogar 35% des weltweiten Kunststoff- bzw. Plastik-Verbrauchs alleine auf Verpackungen, beispielsweise auf Lebensmittelverpackungen, zurückzuführen (Plastikmüll Statistik 2016). Das entspricht rund 8% der weltweiten Ölproduktion, die ausschließlich zur Herstellung von Kunststoff- bzw. Plastik-Verpackungen verbraucht wird. 2050 könnte dieser Wert schon bei 20% liegen.

Da Verpackungen meist als Einwegartikel vorgesehen sind und Kunststoffe biologisch nur sehr langsam abbaubar sind, hat die Popularität von KunststoffVerpackungen weitreichende ökologische Konsequenzen. Jährlich verenden etwa 1.000.000 Seevögel und 100.000 Meeressäuger durch den Kontakt mit Plastikmüll, beispielsweise von Verpackungen etc. (Zudem gibt es Schätzungen zufolge in weiten Teilen des Meeres mittlerweile 6-mal mehr Plastik als Plankton.)

Um derartige ökologische Probleme einzudämmen und den Umweltschutz zu stärken, wurde in Europa die Verpackungsverordnung erlassen, welche in Deutschland durch das am 1. Januar 2019 in Kraft getretene neue Verpackungsgesetz (VerpackG) abgelöst wurde. Sinn und Zweck dieses Verpackungsgesetzes besteht darin, Plastikmüll zu reduzieren, die Wiederverwertung (Recycling) von Kunststoffen zu stärken und umweltfreundlichere Verpackungen zu fördern. Beispielsweise sollen Kunststoffverpackungen durch umweltfreundlichere Alternativen wie biologisch abbaubare Verpackungen aus Karton oder Papier ersetzt werden.

In der Praxis ist eine derartige Umstellung von Kunststoffverpackungen auf umweltfreundlichere Verpackungen, bei denen zumindest ein Teil des Kunststoffes durch Karton oder Papier ersetzt ist, jedoch insbesondere bei der Herstellung von Verpackungen umständlich und kostenintensiv und somit problembehaftet.

In den allermeisten Fällen müssen zur Fertigung eines neuen Verpackungstyps auch neue Verpackungsmaschinen angeschafft werden, da herkömmliche Verpackungsmaschinen jeweils ausschließlich zur Fertigung eines bestimmten Verpackungstyps geeignet bzw. ausgelegt sind.

### Aufgabe der Erfindung

An dieser Stelle möchte die vorliegende Erfindung ansetzen, um die Umstellung auf umweltfreundlichere Verpackungstypen auf einfache und wirtschaftliche Weise zu ermöglichen und somit einen Beitrag zur praktischen Umsetzung des Verpackungsgesetzes und zum Umweltschutz zu leisten. Dies geschieht etwa durch den Einsatz von Papier, das aus nachwachsenden Rohstoffen (wie Cellulose) hergestellt wird.

Der vorliegenden Erfindung liegt somit die Aufgabe zugrunde, die aus dem Stand der Technik bekannten Probleme abzumildern oder ganz zu beseitigen. Konkret ist es eine Aufgabe der vorliegenden Erfindung, ein möglichst umweltfreundliches Verpackungsmaterial bzw. eine möglichst umweltfreundliche Verpackung zu schaffen.

Verbunde von Folien mit Papier sind bereits bekannt. Da aber Papier die Eigenschaft hat, undurchsichtig zu sein, ist auch ein Verbund von Folie mit Papier natürlich ebenfalls undurchsichtig bzw. opak. Dies ist gerade bei Verbunden aus Papier und Folie, die als Ober- oder Deckelfolien verwendet werden, sehr nachteilig. Der Verbraucher möchte nämlich gerne das Produkt sehen, das er einkauft. Um das zu gewährleisten, muss bei einem herkömmlichen Verbund aus Folie und Papier ein mehr oder weniger großer Bereich mit Papier ausgespaart werden, damit es ein Sichtfenster auf das Produkt gibt, das an dieser Stelle nur aus der Folie besteht. All das erfordert also bei Verwendung eines herkömmlichen, undurchsichtigen, opaken Papier-Folie Verbund einen weiteren Prozessschritt, nämlich dass Papier vor der Kaschierung mit Folie ausgestanzt und entfernt werden muss, damit später ein Sichtfenster entsteht, mit dem der Verbraucher das Produkt sehen kann. Nachteilig daran ist also der weitere Prozessschritt des Ausstanzens (bzw. Entfernen mittels Laserperforation) eines merklichen Anteils an Papier, was insgesamt wiederum zu höherem Anteil an Kunststoff führt. Außerdem ist der Übergang Folie und Papier, an diesem Sichtfenster, eine Schwachstelle, an der der Verbund gelöst werden kann, weil der Verbund dort einfach nicht homogen aus Folie und Papier besteht, sondern beim Sichtfenster eben nur aus Folie besteht.

Des weiteren stellt diese Schwachstelle auch ein Problem dar, wenn man bei dem Papier-Folie-Verbund die Folie und das Papier trennen möchte, um diese Materialien einem getrennten Recycling zuzuführen: Da Papier einen großen ausgestanzten Bereich hat, neigt das Papier an diesen Stellen, insbesondere an den Ecken, abzureißen, so dass das Papier nicht mehr vollständig von der Folie getrennt werden kann. Dies würde jedoch nicht passieren, wenn das Papier als ganzes, also ohne ausgesparte Bereiche, abgezogen werden kann.

Schließlich ist es auch nachteilig, wenn es bei dem Verbund Folie und Papier Bereiche gibt, wo nur Folie alleine verwendet werden kann, damit man ein Sichtfenster auf das Produkt erhält. Dadurch erkennt der Verbraucher unmittelbar, dass auf Kunststoff dort nicht verzichtet werden kann und die gesamte Verpackung dadurch nicht unbedingt ökologischer ist.

### Lösung der Aufgabe

Diese Aufgabe wird durch einen Papier-Folie-Verbund nach einem der Ansprüche 1 bis 6 sowie eine Verpackung nach einem der Ansprüche 8 bis 11 gelöst. Weitere Aspekte der vorliegenden Erfindung betreffen die Verwendung eines erfindungsgemäßen Papier-Folie-Verbunds zur Herstellung einer Verpackung sowie Verfahren zur Herstellung eines erfindungsgemäßen Papier-Folie-Verbunds sowie einer Verpackung.

### Zusammenfassung der Erfindung

Der Kerngedanke der vorliegenden Erfindung kann darin gesehen werden, bei herkömmlichen Verpackungen so viel Kunststoff wie möglich durch umweltfreundlicheres Papier zu ersetzen. Da Papier biologisch abbaubar und recylingfähig ist und zudem aus nachwachsenden Rohstoffen erzeugt wird, kann durch einen hohen Papieranteil die gesamte Verpackung umweltfreundlicher und nachhaltiger ausgestaltet werden.

Zudem sollen bei den Verbrauchern beliebte Eigenschaften herkömmlicher Kunststoffverpackungen, wie z.B. die gute Sichtbarkeit eines verpackten Produkts aufgrund der Transparenz der eingesetzten Kunststoffe, erhalten bleiben.

Die Aufgabe der vorliegenden Erfindung wird durch einen Papier-Folie-Verbund mit mindestens einer ersten, eine Folie umfassenden, Schicht und einer mit der ersten Schicht verbundenen zweiten, ein Papier umfassenden, Schicht, gelöst, wobei der Papier- Folie-Verbund durchsichtig oder zumindest kontakttransparent ist. Vorzugsweise ist der gesamte Papier- Folie-Verbund durchsichtig / transparent oder zumindest kontakttransparent.

Vorzugsweise ist die Folie der ersten Schicht durchsichtig und / oder kontakttransparent und das Papier der zweiten Schicht ist ebenfalls durchsichtig und / oder kontakttransparent. Durch diese Ausgestaltung kann gewährleistet werden, dass der gesamte Papier- Folie-Verbund bzw. die Gesamtheit des Papier- Folie-Verbunds durchsichtig und / oder kontakttransparent ist. In anderen Worten wird durchsichtiges und / oder kontakttransparentes Papier ausgewählt und eingesetzt um die bei herkömmlichen Verpackungen eingesetzten Kunststofffolien zumindest teilweise zu ersetzen.

Durch einen erfindungsgemäßen Papier- Folie-Verbund kann die eingesetzte Menge an Kunststoff reduziert werden bzw. durch Papier ersetzt werden und dennoch eine hohe Transparenz, Durchsichtigkeit oder Kontakttransparenz des Papier-Folie-Verbunds oder einer einen derartigen Papier- Folie-Verbund aufweisenden Verpackung gewährleistet werden. Eine Entfernung des Papiers, etwa durch Ausstanzen oder Laserperforation vor der Kaschierung mit Folie, ist zur Bildung eines Sichtfensters nicht mehr erforderlich.

Für einen erfindungsgemäßen Papier-Folie-Verbund geeignete Papiere werden auch als Transparentpapiere bezeichnet.

Beispielsweise kann das unter dem Namen Pergamin / Pergamyn bekannte Papier und / oder das unter dem Namen Glassin / Glassine bekannte Papier zur Herstellung eines erfindungsgemäßen Papier- Folie-Verbunds eingesetzt werden.

Unter Kontakttransparenz ist hierbei die Eigenschaft zu verstehen, dass, wenn ein erfindungsgemäßer Papier- Folie-Verbund beispielsweise an einem Verpackungsgut anliegt / sich in Kontakt mit diesem befindet, das Verpackungsgut durch den Papier-Folie-Verbund hindurch sichtbar ist. Die Kontakttransparenz eines erfindungsgemäßen Papier-Folie-Verbunds ist insbesondere dann von Bedeutung, wenn der Papier-Folie-Verbund als Oberteil einer Verpackung eingesetzt wird, wobei das Oberteil der Verpackung an dem Verpackungsgut (beispielsweise Lebensmittel, insbesondere Wurst, Käse etc.) anliegt, sodass ein Verbraucher das Verpackungsgut durch den Papier-Folie-Verbund als Oberteil der Verpackung sehen kann.

In anderen Worten wird unter dem Begriff "kontakttransparent" im Sinne dieser Erfindung verstanden, dass die erfindungsgemäße Folie zumindest so transparent ist, dass ein verpacktes / zu verpackendes Verpackungsgut durch den Papier-Folie-Verbund erkennbar und / oder identifizierbar ist, wenn der Papier-Folie-Verbund zumindest teilweise in Kontakt mit dem Verpackungsgut steht bzw. sich in dessen Nähe befindet. Die Bestimmung der Kontakttransparenz wird mit der nachstehend in den Beispielen beschriebenen Methode durchgeführt.

Weiterhin ist ein erfindungsgemäßer Papier-Folie-Verbund vorzugsweise wasser- und luftundurchlässig. Der Verbund besitzt idealerweise auch eine Barriere gegen Fette und Öle.

Grundsätzlich ist es denkbar und von der Erfindung umfasst, dass eine Sandwich-Struktur vorliegt, also z.B. Folie-transparentes Papier-Folie.

Ebenso wäre ein Sandwich-Verbund transparentes Papier-Folie-transparentes Papier denkbar und von der Erfindung umfasst. Dabei könnte das Papier auf der zum Produkt innenliegenden Seite etwa mit einem Siegellack beschichtet sein, so dass es mit dem entsprechenden Bodenteil siegeln und damit die Verpackung geschlossen werden kann.

Weiterhin hat es sich als vorteilhaft erwiesen, wenn der Papier-Folie-Verbund tiefziehfähig ist, insbesondere, wenn der Papier-Folie-Verbund derart tiefziehfähig, dass er zur Herstellung von tiefgezogenen Formmulden für Verpackungen einsetzbar ist. Bei einer erfindungsgemäßen Verpackung wird der Papier-Folie-Verbund vorzugsweise derart tiefgezogen, dass eine ca. 1cm tiefe Mulde zur Aufnahme von verpackungsgut gebildet wird. Die Mulde kann vorzugsweise zwischen 0,5 und 2 cm tief sein. Je nach Anwendung sind auch andere Ausgestaltungen der Aufnahmemulde einer erfindungsgemäßen Verpackung denkbar.

Diese Eigenschaft des Papier-Folie-Verbunds ermöglicht es, dass der Papier-Folie-Verbund sowohl als Unterteil (Formmulde, Tablett) einer herkömmlichen Lebensmittelverpackung, als auch als Oberteil oder Deckel einer herkömmlichen Verpackung, insbesondere Lebensmittelverpackung, eingesetzt werden kann.

Herkömmliche Verpackungen für Lebensmittel weisen als Unterteil meist eine Formmulde, in welcher ein Verpackungsgut eingelegt werden kann, oder ein flaches Tablett auf, auf welches ein Verpackungsgut aufgelegt werden kann. Daraufhin wird die Verpackung durch ein Oberteil / einen Deckel verschlossen, der mit dem Unterteil verschweißt und / oder versiegelt wird, wodurch das Verpackungsgut von der Außenwelt abgeschirmt wird. Ist das Unterteil der Verpackung ein flaches Tablett, so kommt als Oberteil meist eine Skin-Folie zum Einsatz, welche sich wie eine zweite Haut an das Verpackungsgut anschmiegt.

Gemäß einem bevorzugten Aspekt der vorliegenden Erfindung weist / weisen die erste, eine Folie umfassende, Schicht und / oder die zweite, ein Papier umfassende, Schicht eines erfindungsgemäßen Papier- Folie-Verbunds jeweils an ihrer der jeweils anderen Folie zugewandten Seite eine Peel-Beschichtung oder eine ähnlich wirkende Beschichtung auf, wodurch ein einfaches Lösen der ersten und zweiten Schichten voneinander ermöglicht wird.

Durch die Peel-Beschichtungen oder ähnlichen Beschichtungen wird die Recyclingfähigkeit des Papier- Folie-Verbunds sowie der daraus gefertigten Verpackungen weiter erhöht, denn die einzelnen Komponenten bzw. Rohstoffe Papier und Folie / Kunststoff können sehr einfach, sauber und rückstandsfrei voneinander getrennt werden.

Grundsätzlich kann es nach einem Aspekt der Erfindung vorgesehen sein, dass mindestens eine, mehrere oder sämtliche Schichten eines Papier- Folie-Verbunds und / oder auch sämtliche Teilschichten / Unterschichten der jeweiligen Folienschicht(en) und / oder Papierschicht(en) jeweils eine Peel-Beschichtung oder eine ähnlich wirkende Beschichtung aufweisen, wodurch ein einfaches Lösen / Trennen der einzelnen Schichten voneinander ermöglicht wird

Gemäß einem anderen vorteilhaften Aspekt der Erfindung weist die erste Schicht eines erfindungsgemäßen Papier-Folie-Verbunds eine vorzugsweise sauerstoffundurchlässige Barrierefolie oder -lack und / oder eine Mehrschichtfolie auf.

Eine Barrierefolie umfasst beispielsweise eine Polyamid- und / oder eine EVOH-Schicht.

Auf diese Weise kann gewährleistet werden, dass die vorteilhafte Eigenschaft herkömmlicher Kunststofffolien, nämlich das Abschirmen des Verpackungsguts von der Außenwelt und somit ein sicherer Schutz vor einem Verderben des Verpackungsguts durch einen erfindungsgemäßen Papier- Folie-Verbund trotz reduziertem Kunststoffanteil auf gleichbleibend hohem Niveau bereitgestellt wird.

Weiterhin hat es sich als vorteilhaft erwiesen, wenn die erste und / oder die zweite Schicht eines erfindungsgemäßen Papier- Folie-Verbunds bedruckt und / oder lackiert ist. In anderen Worten kann ein erfindungsgemäßer Papier-Folie-Verbund mittels herkömmlicher Druckverfahren und / oder Lackierverfahren bearbeitet werden.

Gemäß einem weiteren vorteilhaften Aspekt der Erfindung sind die erste und die zweite Schicht miteinander mittels Verklebung, und / oder Kaschierung, insbesondere Thermo- oder Extrusionskaschierung, miteinander verbunden.

Erfindungsgemäß kann zur Herstellung eines erfindungsgemäßen Papier-Folie-Verbunds also eine Verklebung und / oder Kaschierung, insbesondere Thermo- oder Extrusionskaschierung, eingesetzt werden, um die erste Schicht (Folie) und die zweite Schicht (Papier) miteinander zu verbinden.
Vorteilhaft ist es hier, auf der Folie eine Schicht mit thermisch aktivierbarem Material (Polymer) anzubringen, so dass diese Seite der Folie im Zuge der Thermokaschierung unter Einstellung einer bestimmten Temperatur, eines bestimmten Drucks und einer bestimmten Einwirkzeit von Druck und Temperatur mit dem Papier verbunden werden kann.

Im Falle, dass eine Mehrschichtfolie im Rahmen der ersten Schicht des erfindungsgemäßen Papier-Folie-Verbunds eingesetzt wird, können die Schichten der Mehrschichtfolie miteinander durch Verklebung und / oder Kaschierung, insbesondere Thermo- oder Extrusionskaschierung, Coextrusion, insbesondere Blas-Coextrusions oder Cast-Coextrusion, Extrusions-Beschichtung, CoextrusionsBeschichtung oder durch Beschichtung aus der Lösung oder Dispersion verbunden werden. All diese Verfahren sind dem Fachmann bekannt.

Ein weiterer Aspekt betrifft die Verwendung eines erfindungsgemäßen Papier-Folie-Verbunds zur Herstellung einer Verpackung, insbesondere einer Verpackung für Lebensmittel.

Ein anderer Aspekt der Erfindung betrifft eine Verpackung, insbesondere eine Verpackung für Lebensmittel, welche einen erfindungsgemäßen Papier-Folie-Verbund aufweist.

Vorzugsweise kommt der erfindungsgemäße Papier-Folie-Verbund als vorzugsweise tiefgezogenes Unterteil und / oder als Oberteil einer Verpackung zum Einsatz.

Kommt der erfindungsgemäße Papier-Folie-Verbund als Oberteil und / oder Unterteil einer Verpackung zum Einsatz, so entfällt bei der Fertigung der Schritt des Ausstanzens eines Sichtfensters in der Verpackung, da die Durchsichtigkeit / Kontakttransparenz des erfindungsgemäßen Papier-Folie-Verbunds es ermöglicht, dass der Verbraucher ein in der Verpackung verpacktes Verpackungsgut direkt durch den Papier-Folie-Verbund sieht.

Grundsätzlich kann natürlich auch eine erfindungsgemäße Verpackung mit einem Sichtfenster ausgestaltet werden. Eine erfindungsgemäße Verpackung kann vollständig oder auch nur teilweise aus einem erfindungsgemäßen Papier-Folie-Verbund bestehen. Das Oberteil und / oder Unterteil der Verpackung kann vollständig oder auch nur teilweise aus einem erfindungsgemäßen Papier-Folie-Verbund bestehen.

Es hat sich als vorteilhaft herausgestellt, wenn das Unterteil und das Oberteil der Verpackung miteinander über eine Peel-Beschichtung verbunden sind, wodurch ein einfaches Lösen des Oberteils der Verpackung von dem Unterteil der Verpackung ermöglicht wird. Auf diese Weise kann eine besonders umweltfreundliche Verpackung erzeugt werden, da die einzelnen Komponenten / Rohstoffe der Verpackung auf einfache Weise und rückstandslos voneinander getrennt werden können und somit separat recycled werden können.

Denkbar ist es, dass der Papier-Folie-Verbund als Oberteil der Verpackung eingesetzt wird und als Unterteil ein tiefziehfähiger Verbund bestehend nur aus Folie verwendet wird.

Weiterhin betrifft die vorliegende Erfindung die Herstellung einer erfindungsgemäßen Verpackung, wobei das Verfahren zur Herstellung den folgenden Schritt umfasst:
- Ausbilden eines Unterteils einer Verpackung in Form einer Formmulde zur Aufnahme eines Verpackungsguts vorzugsweise mittels Tiefziehens aus einem erfindungsgemäßen Papier-Folie-Verbund oder in Form eines Tabletts aus einem erfindungsgemäßen Papier-Folie-Verbund, oder
- Aufbringen eines erfindungsgemäßen Papier-Folie-Verbunds als Oberteil auf ein Unterteil einer Verpackung.

In anderen Worten kann das Unterteil und / oder das Oberteil einer Verpackung, insbesondere einer Lebensmittelverpackung für beispielsweise Wurst oder Käse einen erfindungsgemäßen Papier-Folie-Verbund aufweisen bzw. zumindest teilweise oder auch vollständig aus einem erfindungsgemäßen Papier-Folie-Verbund gefertigt sein / werden.

Gemäß einer anderen erfindungsgemäßen Ausgestaltung ist / wird das Unterteil der Verpackung aus einem erfindungsgemäßen Papier-Folie-Verbund und das Oberteil der Verpackung aus einer Skin-Folie ausgebildet.

Weiterhin betrifft die vorliegende Erfindung ein Verfahren zur Herstellung einer erfindungsgemäßen Verpackung, umfassend die Schritte:
- Ausbilden eines Unterteils einer Verpackung in Form einer Formmulde zur Aufnahme eines Verpackungsguts vorzugsweise mittels Tiefziehens aus einem Folien-Verbund, und / oder
- Aufbringen eines erfindungsgemäßen Papier-Folie-Verbunds als Oberteil auf ein Unterteil einer Verpackung.

### Ausführliche Beschreibung der Erfindung

Weitere Vorteile, Merkmale und Effekte der vorliegenden Erfindung ergeben sich aus der nachfolgenden ausführlichen Beschreibung sowie den Beispielen. Dabei dienen die Beispiele lediglich der weiteren Erläuterung der Erfindung, ohne diese einzuschränken.

### Bestimmung der Kontakttransparenz

Zunächst einmal wird die Methode zur Bestimmung der Kontakttransparenz dargelegt. Hierbei wird zusätzlich auf die Veröffentlichungen DE102009041841A1 und WO2010075946A1 verwiesen, in denen die Methode zur Bestimmung der Kontakttransparenz ausführlich dargelegt ist.

Zur Bestimmung der Kontakttransparenz wird die jeweilige Folie bzw. im vorliegenden Fall ein Papier-Folie-Verbund auf eine mit schwarzem Text (Schriftart: Arial, Schriftgröße 10) bedruckte weiße DINA4-Seite gelegt und es wird die Lesbarkeit des darunter liegendes Textes mit einem Schulnotensystem beurteilt. Hierbei werden die Noten wie folgt verteilt:
- Note 1: sehr gut lesbar, der Text ist klar erkennbar, es fällt nicht auf, dass überhaupt eine Folie oder ein Papier-Folie-Verbund über dem Text liegt,
- Note 2: sehr leichte Beeinträchtigung der Lesbarkeit des Textes unter der Folie / dem Papier-Folie-Verbund,
- Note 3: leichte Beeinträchtigung der Lesbarkeit des Textes unter der Folie/ dem Papier-Folie-Verbund,
- Note 4: Merkliche Beeinträchtigung der Lesbarkeit des Textes unter der Folie/ dem Papier-Folie-Verbund. Der Text kann aber insgesamt noch gelesen werden.
- Note 5: Deutliche Beeinträchtigung der Lesbarkeit des Textes unter der Folie/ dem Papier-Folie-Verbund. Die Buchstaben erscheinen sehr verschwommen und sind verdeckt und sind fast nicht mehr zu erkennen. Der Text kann praktisch nicht mehr gelesen werden.
- Note 6: Der Text unter der Folie kann nicht mehr erkannt werden und ist unlesbar. Die Folie deckt den Text (nahezu) vollständig ab. Es liegt keine Kontakttransparenz mehr vor.

Vorzugsweise kommen im Rahmen der vorliegenden Erfindung Papiere und / oder Folien zum Einsatz, deren Kontakttransparenz mit einer Noten zwischen den Noten 1 -3 bewertet wurde. Grundsätzlich können auch Papiere und / oder Folien mit einer Kontakttransparenz mit einer Note zwischen den Noten 1 - 5 verwendet werden.

Vorzugsweise hat ein erfindungsgemäßer Papier-Folie-Verbund eine Kontakttransparenz, welche mit einer Note zwischen den Noten 1 - 3 oder den Noten 1-4 bewertet wurde. Grundsätzlich kann ein erfindungsgemäßer Papier-Folie-Verbund eine Kontakttransparenz mit einer Note zwischen den Noten 1 - 5 aufweisen.

Din Norm zur Bestimmung der Transparenz des Papiers: Diese ist in DIN 53147 beschrieben.

### Verbindung der Papier-Schicht mit der Folienschicht

Hierbei werden übliche, dem Fachmann bekannte Methoden eingesetzt, z.B. erfolgt ein Einsatz von Klebern, z.B. 2 K PUR Systemen (diese können zum Beispiel Lösemittel-haltig oder Lösemittel-frei sein), Leim, Hotmelts etc., eine Thermokaschierung (geeignete Folie siehe unten) und / oder eine Extrusionskaschierung (mit Polymeren zur Verbindung der Substrate).

Insbesondere die Thermokaschierung hat sich in der Praxis als vorteilhaft herausgestellt, hierbei wird eine geeignete Thermokaschierfolie (TKF), die z.B. aus PE/HV/PA/EVOH/PA/HV/PE (TKF) besteht, gegen Papier kaschiert.
Die Thermokaschierfolie kann somit die Folienschicht (erste Schicht) eines erfindungsgemäßen Papier-Folie-Verbunds bilden.

Mit der Thermokaschierung können sogar noch höhere Verbundhaftungwerte erzielt werden, als etwa bei der herkömmlichen (Lösemittelfreien LF) Kleberkaschierung, zum Beispiel 2 K Polyurethan-Systemen. Hierbei konnte eine Migrationsfreiheit sogar unter der Nachweisgrenze durch geeignete Migrationsmessungen festgestellt werden.

Es können bei einer Verpackung auch tiefziehfähige Folien (sowohl Ober-, als auch Unterfolie) zur Verfügung gestellt werden. Dabei verhalten sich die erfindungsgemäßen thermokaschierten Folien bzw. Papier-Folien-Verbunde ebenso wie die bereits im Stand der Technik bekannten, mit LF- oder LH-Klebern kaschierten Verbundfolien. Bei Migration und den Verbundhaftungswerten sind die erfindungsgemäßen Papier-Folien-Verbunde sogar deutlich besser als der bisherige Stand der Technik.

Die erzeugten Verbunde werden bevorzugt auch tiefgezogen, etwa auf üblichen FFS (Form, Fill & Seal) Anlagen.

Mehrere Arten von Thermokaschierfolien (TKF-Folien) können eingesetzt werden:
Es kann eine Monofolie oder Mehrschichtfolie verwendet werden. Diese muss mindestens eine Schicht für eine thermisch initiierte Folienhaftung aufweisen, vorzugsweise auf der TKF-Seite.

Bevorzugt sind 3-Schichtfolien PE/HV/PA oder 5-Schichtfolien Polyolefin/HVPA/HV/Polyolefin oder Polyolefin/HV/Polyolefin/HV/PA oder Polyolefin/HV/EVOH/HV/Polyolefin. Es können auch 7-Schichtfolien wie Polyolefin/HV/PA/EVOH/PA/HV/Polyolefin eingesetzt werden. Diese Folien können zudem auch verblockt sein und damit auch 6, 10 oder 14-schichtig. Praktisch sind unendlich viele Schichten der Folie möglich.

Auch POP oder POE können im Rahmen der Folie zum Einsatz kommen bzw. eine Schicht einer Mehrschichtfolie bilden. Ethylen-Vinylacetat-Copolymere (EVAc) haben sich ebenfalls sehr als geeignet bei Thermokaschierfolien erwiesen, wenn diese mit Papier verbunden werde sollen.

Bevorzugt ist eine Mehrschichtfolie mit wenigstens einer Polyamid-Schicht oder mindestens einer EVOH-Schicht ausgestattet. Eine derartige Schicht wird im Rahmen einer Barrierefolie verwendet.

Die Folie wird als Schlauchform oder bevorzugt als Flachfolie eingesetzt.

Wichtig ist es hierbei, dass die Thermokaschierfolie an ihrer Außenseite eine zu einer anderen Folie haftenden Schicht aufweist, die durch thermische Aktivierung mit der anderen Folie verbunden bzw. an dieser angeklebt werden kann.

Diese haftende Schicht kann vor der Verbindung noch vorbehandelt werden, z.B. mit Corona, Plasma und / oder Flammvorbehandlung, was zu einer nochmals höheren Oberflächenspannung der Folie führt. Die Oberflächenspannung kann damit im Bereich von ca. 25 bis ca. 72 mN/m liegen.

Von besonderer Bedeutung ist auch, dass der Papier-Folien-Verbund mit der thermisch aktivierbaren (kleberfreien) TKF-Folie nachträglich noch bedruckt oder bedruckt und lackiert werden kann. Dazu kann zusätzlich ein Primer sehr hilfreich sein und eingesetzt werden.

Ein beispielhaftes Rezept für zwei Folien, welche als TKF-Folie zur Kaschierung gegen ein durchsichtiges Papier (z.B. Pergamin/Glassine-Papier) im Rahmen eines erfindungsgemäßen Papier-Folie-Verbunds zum Einsatz kommen können, ist nachstehend wiedergegeben:

**Folie 1: Thermokaschierfolie (TKF) mit thermokaschierbarer Schicht 1**

| Material | Gewichts-Anteil | Schichtdicke |
|---|---|---|
| | | |
| 1 : POP/LDPE | 80%/20% | 16 - 20µ |
| 2 : HV | 100% | 3 - 6µ |
| PA/EVOH/PA | 100/100/100 | 2/ 4/ 2 µ |
| 6: wie 2 | | |
| 7 LDPE | 100% | 14 - 18µ |

**Folie 2: Thermokaschierfolie (TKF) mit thermokaschierbarer Schicht 1**

| Material | Gewichts-Anteil | Schichtdicke |
|---|---|---|
| | | |
| 1: POP/LDPE | 80%/20% | 25 - 35 |
| 2: HV | 100% | 4 - 8µ |
| 3 CoPA | 100% | 20 - 30µ |
| 4 wie 2 | | |
| 5 LDPE | 100µ | 25 - 35µ |

**Folie 3: Kaschierfolie mit EVOH, zum Beispiel mit 32 mol % Ethylen.**

| Material | Gewichts-Anteil | Schichtdicke |
|---|---|---|
| | | |
| 1 : LDPE | 100 % | 20µ |
| 2 : HV | 100% | 6µ |
| 3: EVOH | 100 % | 5µ |
| 4: wie 2 | | |
| 5: LDPE | 100% | 20µ |

**Folie 4: Kaschierfolie mit Polyamid PA, zum Beispiel Copolyamid 6/6,6**

| Material | Gewichts-Anteil | Schichtdicke |
|---|---|---|
| | | |
| 1 : LDPE | 100 % | 20µ |
| 2 : HV | 100% | 6µ |
| 3: PA | 100 % | 10µ |
| 4: wie 2 | | |
| 5: LDPE | 100% | 20µ |

Geeignete Rohstoffe sind zum Beispiel:
LDPE: Lupolen 2420 F oder Lupolen 3010D von LyondellBasell
HV: Admer NF 498 E von Mitsui
PA: Durethan C38 F von Lanxess
EVOH: siehe unten

### I. Verwendete Materialien

Das in vielen Beispielen verwendete LDPE ist Lupolen 2420 F von der Firma LyondellBaseII Polymers. Auch das eingesetzte Lupolen 3010D ist ein LDPE von LyondellBasell Polymers.

Durethan C38 F von Lanxess ist ein Copolyamid mittlerer Viskosität.

Moplen EP240H ist ein nukleiertes heterophasiges Polypropylen-Copolymer von LyondellBasell

Admer QB510E von Mitsui Chemicals ist ein auf Polypropylen basierender Haftvermittler, das mit Maleinsäureanhydridgruppen modifiziert ist

Admer NF498E von Mitsui Chemicals ist ein mit Mafeinsäureanhydridgruppen modifiziertes LDPE, besitzt eine große Adhäsion zu PET, EVOH und PA, ist sehr gut verarbeitbar und weist eine thermische Stabilität auf, die äquivalent oder höher im Vergleich zu gewöhnlichem PE ist.

EVAL T101B von der Firma EVAL Europe ist ein Polymer auf EthylenVinylalkohol-Copolymer-Basis (EVOH).

Exact 0201 von der Firma Borealis Plastomers v.o.f. ist ein Polyolefin-Plastomer (POP), genauer ein Ethylen-basiertes Octen-Ptastomer, das in einem Polymerisationsprozess in Lösung unter Verwendung eines Metallocen-Katalysators hergestellt wird. Seine Dichte liegt bei 0,902 g/cm³ entsprechend ISO 1183 (bei 23 °C).

Affinity PL 1850G ist ein Polyolefin-Plastomer (POP) der Firma The Dow Chemical Company, das mit Hilfe eines Metallocen-Katalysators hergestellt wird.

Engage 8450 von der Firma The Dow Chemical Company ist ein Polyolefin-Elastomer (POE), genauer ein Ethylen-Octen-Copolymer, das effizient bei der Coextrusion eingesetzt kann. Zudem ist es sehr kompatibel mit anderen Polyolefinen. Es wird ebenfalls mittels Metallocen-Katalyse hergestellt

Polybutene-1 PB 8640M von der Firma LyondellBasell Polymers ist ein Random-Copolymer von Butene-1 mit einem niedrigen Ethylen-Anteil. Es wird hauptsächlich als Beimischung in der Siegelschicht von einfach zu öffnenden (sogenannten "peelbaren") Verpackungsfilmen eingesetzt.

**Folie 5: Kaschierfolie (Schicht 1) mit einer Peel-Siegelschicht (Schicht 5):**

| Schichtnummer | Zusammensetzung | Anteil in Schicht in % | Dicke in µm |
|---|---|---|---|
| 1 Kaschierseite | • Lupolen 3010D | • 100 | 17,5 |
| 2 | • Admer NF498E | • 100 | 5 |
| 3 | • Durethan C38 F | • 100 | 5 |
| 4 | • EVAL T101B | • 100 | 5 |
| 5 | • Durethan C38 F | • 100 | 5 |
| 6 | • Admer NF498E | • 100 | 5 |
| 7 | • Lupolen 3010 D | • 90 | 17,5 |
| Siegelseite | • Polybuten-1 | • 10 | |
| | | | Summe: 60 µm |

Die vorliegende Erfindung ist nicht auf diese nur beispielhaft angegeben Folien beschränkt. Auch wenn vorstehend Thermokaschierung erwähnt wurde, ist die vorliegende Erfindung darauf nicht beschränkt, sondern umfasst weitere Verfahren zur Herstellung von Verbunden.

Die Kaschierung kann beispielsweise auch mittels Kleber-Kaschierung erfolgen. Bei dieser Kaschierung wird eine Trägerfolie mit Kleber beaufschlagt, im Trockentunnel getrocknet und mittels Kühlwalze auf Raumtemperatur gebracht. Danach werden beide Folien mit exakt gleicher Zugspannung (Rollneigung) im Kaschierwerk zusammengeführt. Als geeigneter LF-Kleber eignet sich zum Beispiel das System LOCTITE LIOFOL LA 7732 / LA 6084 (bekannt als Liofol UR 7732 / UR 6084) der Henkel AG & Co. KGaA, 40191 Düsseldorf, Deutschland.

Auf einer derartigen Anlage können auch Halbverbunde wie z.B. PETP/Alu hergestellt werden, welche durch einen weiteren Arbeitsgang auf derselben Anlage zum 3-lagigen PETP/Alu/PE Verbund gemacht werden könnten. Die so hergestellte Verbundfolie zeichnet sich durch exakte, rollneigungsfreie Planlage aus. Diese Anlagen gibt es auch als Tandem-Ausführung; damit ist ein 3-lagiger Verbund in einem Durchlauf möglich.

Weiterhin ist auch eine Extruder-Kaschierung möglich. Bei dieser Art der Kaschierung wird PE aus der Schmelze als Kaschiermittel eingesetzt. Je nach Bedarf wird die zu kaschierende Seite geprimert (Haftvermittler). Kombinationsmöglichkeiten mit Kleberkaschierung und Beschichtung sind gegeben.

Anstatt durch Kaschierung können Verbunde allerdings auch mittels weiterer Verfahren ausgebildet werden, beispielsweise als Coextrusions-Verbund, Beschichtungs-Verbund etc.

Hierbei hat das jeweils verwendete Herstellungsverfahren einen Einfluss auf die Eigenschaften der mittels dieses Verfahrens erzeugten Verbundfolien / Papier-Folien-Verbunde. Im Folgenden wird eine Übersicht über diese Einflüsse wiedergegeben:

### Kleberkaschierung

### Auswirkungen und Besonderheiten:

- Polyolefine ab 20 µ Dicke, ggf. mit Gleit- und/oder Antiblockmittel sind als Heißsiegelschicht und für alle Trägerfolien möglich
- dicke Kleberschicht (und ggf. Polyolefine höherer Dichte) ergeben höhere Steifigkeit, Kleber einfärbbar
- transparente Verbunde sind relativ klarsichtig und homogen
- rollneigungsarme Fertigung möglich
- geruchsneutral

### Nachteile der Kleberkaschierung:

- Die Kleberkaschierung auf Basis zum Beispiel von herkömmlichen und etablierten 2K-Polyuretahnsystemen (LH- oder LF) birgt immer die Gefahr einer unzureichenden Kleberaushärtung oder einer sehr langen Trocknungszeit.
- Ferner besteht immer die Gefahr, dass migrierende Bestandteile aus der Kaschierschicht heraustreten und so in das verpackte Lebensmittel gelangen können. Es besteht die Gefahr der Gesundheitsschädigung.
- Das Verbinden von Folie mit einer anderen Folie ist mit einem erhöhten Aufwand und Kosten verbunden. Ziel muss sein, eine thermisch aktivierbare und funktionierende Schicht gleich im Zuge der Folienextrusion bereit zu stellen. Cast-Extrusion, Blasextrusion, oder auch Extrusions-Beschichtung mit den aktivierbaren Polyolefin-Plastomeren ist möglich.
- Das Bereitstellen des Klebers, sei es durch Kaschierung oder auch durch Extrusionskaschierung, erfordert immer Lagerplatz und ist damit logistisch möglichst zu vermeiden.
- Daneben müssen bei den üblichen LH- und LF- 2K Polyurethansystemen stets 2 Komponenten miteinander im richtigen Mischungsverhältnis vermischt werden. Das birgt die Gefahr, dass durch eine falsche Zusammenmischung der Kleber nicht oder nur unvollständig aushärtet.
- Schließlich besteht die Gefahr, dass ein reaktives Klebersystem schon vor der Applikation aushärtet, etwa durch Alterung oder durch Einwirkung von Wasser oder durch Eintrocknung (Verdampfen des Lösungsmittels).
- Schließlich erfordert die Verwendung von Klebern stets einen erhöhten Aufwand der Reinigung der Kaschieranlage. Insbesondere ist dies dann bei Kleberwechseln zu beachten.

Erfindungsgemäß liegt eine funktionierende / haftende Schicht für die Thermokaschierung bereits im Rahmen einer für einen erfindungsgemäßen Papier-Folie-Verbund einzusetzenden Folie vor. Die Herstellung der Mono- oder Coextrusions-Folie geschieht bevorzugt durch Blasextrusion, ist aber auch durch Cast-Extrusion möglich.

Am Besten geschieht die Thermokaschierung von Folien inline, also bei einem Verfahren, bei dem mindestens eine der beiden Folien gerade hergestellt wird und unmittelbar danach zur Herstellung eines Verbunds mit einer anderen Folie (oder Papier) veredelt wird.

Bedingungen: Temperatur der Folie: 40 bis 160°C, bevorzugt 60 bis 140 °C, am meisten bevorzugt 70 bis 130°C. Der Druck auf die zu kaschierenden, erwärmten Folien kann je nach Foliensubstraten oder Papier variabel eingestellt werden.

Es empfiehlt sich ferner eine Vorbehandlung der zu kaschierenden Folie und bei Bedarf des Papiers oder eines anderen verwendeten Substrats. Dies kann die TKF-Folie sein, oder auch die Folie oder das Substrat, gegen die die TKF-Folie kaschiert / geklebt wird. Vorbehandlungsarten siehe oben: Corona, Flamme, etc.

### Extrusionskaschierung

### Auswirkungen und Besonderheiten:

- Polyolefine (siehe oben) als Heißsiegelschicht möglich
- hitzeempfindlichere Trägerfolien (OPP, PVC) sind weniger geeignet
- die Heißsiegelschicht kann dünn (preiswert) sein
- dünne Primerschicht (und PE-LD als Zwischenschicht) möglich, deshalb flexibler
- nicht rollneigungsfrei
- produktionsbedingter, leichter PE-Geruch

### Extrusions- und Coextrusionsbeschichtung

### Auswirkungen und Besonderheiten:

- PE-LD und lonomere (Dicken ab ca. 10 µ) als Heißsiegelschicht möglich
- hitzeempfindlichere Trägerfolien (OPP, PVC) sind weniger geeignet
- wegen dünner Primerschicht sehr flexibel
- zur Schlupfverbesserung leichte Puderung oder Mattierung der PE-Oberfläche empfehlenswert
- transparente Verbunde weniger homogen und klarsichtig
- produktionsbedingter, leichter PE-Geruch (bei Coex günstiger)

### Coextrusion

### Auswirkungen und Besonderheiten:

- Flachfolien-Coextrusion wird vorwiegend für Hartfolien angewandt
- Schlauchfolien-Coextrusion hauptsächlich zur Herstellung von PA/PE-Verbunden, zur Herstellung von Kaschier- und Thermokaschierfolien

### Bestimmung der Verbundhaftung

Die Verbundhaftung der oben genannten Folienverbünde wurde nach DIN 53357 "Trennversuch der Schichten" vom Oktober 1982 gemessen, wobei das in der genannten DIN beschriebene "Verfahren A" angewendet wurde. Die Trennversuche dienen zur Beurteilung, wie fest die Schichten aneinander oder wie fest die Deckschichten auf dem Träger haften. Zur Beurteilung wird die Trennkraft ermittelt. Als Prüfgerät dient die Universalprüfmaschine 281813 der Fa. Frank. Zudem wurde der Probenschneider CUT 02 derselben Firma eingesetzt.
Bei allen Beispielen und Vergleichsbeispielen lag die Verbundhaftung stets über 4 N/15 mm. Dadurch ist stets eine sehr gute Verbundhaftung garantiert. Daher wird auf die Verbundhaftung bei den nachfolgenden Beispielen nicht weiter eingegangen.

### Bestimmung der Migration

Zur Prüfung der Lebensmittelunbedenklichkeit wurden die Folien Migrationsuntersuchungen mit den Simulanzlösungen 3%ige Essigsäure, 10%igem Ethanol, 95%igem Ethanol und Isooctan im einseitigen Kontakt unterzogen.

Die Globalmigration mit 3%iger Essigsäure, 10%igem Ethanol und 95%igem Ethanol wurde jeweils über 10 Tage bei 40°C durchgeführt. Die Globalmigration mit Isooctan wurde über 2 Tage bei 20°C durchgeführt.

Die Durchführung der Prüfung erfolgte in Anlehnung an die Methoden B 80.30-1 (EG) bis B 80.30-4 (EG) der amtlichen Sammlung von Untersuchungsverfahren nach § 64 LFGB. Zur Prüfung wurden jeweils 0,5 dm2 mit 25 ml Simulanzlösung in Kontakt gebracht.
uB: unter Bestimmungsgrenze
uG: unterhalb Grenzwert
Die Migration lag bei allen Beispielen stets unter dem Grenzwert, ja sogar unter der Bestimmungsgrenze. Daher wird auf die Migration bei den nachfolgenden Beispielen nicht mehr weiter eingegangen.

### Druckverfahren

Vorzugsweise wird der Papier-Folien-Verbund mit der thermisch aktivierbaren (kleberfreien) TKF-Folie nachträglich noch bedruckt oder bedruckt und lackiert und zwar vorzugsweise mit einem der folgenden Verfahren: Offset-Druck, Tiefdruck, Flexodruck, Siebdruck, Digitaldruck, HD-Druck, Tampondruck, Tintenstrahldruck.

Nach dem Drucken kann im Fallen von z.B. Schöndruck der Druck noch schützend lackiert werden.

Bevorzugt erfolgt das Druckverfahren direkt auf eine Oberfläche des Papier-Folien-Verbunds.

Grundsätzlich würde das erfindungsgemäße Verfahren zur Herstellung eines erfindungsgemäßen Papier-Folien-Verbunds mit einer derartigen Thermokaschierfolie (TKF) auch dann funktionieren, wenn die Thermokaschierfolie auf eine bereits bedruckte oder lackierte Trägerfolie aufgebracht wird. In diesem Fall würde sich dann der Druck oder auch der besondere Lack (z.B. Barrierelack) zwischen zwei Folien (Kaschierfolie und Trägerfolie) befinden.

Allerdings wäre dies inline nicht zu machen und müsste dann offline passieren. Mit anderen Worten, die Trägerfolie (z.B. eine APET-Cast-Folie oder eine 12 µ dicke OPET-Folie) müsste zuerst produziert werden, anschließend bedruckt oder lackiert werden, und schließlich mittels Thermokaschierung mit der Thermokaschierfolie oder mittels Kleberkaschierung mit der Kaschierfolie verbunden werden.

In einem weiteren Verfahrensschritt würde dann der Verbund aus Kaschierfolie und Trägerfolie mit einem Papier zu einem erfindungsgemäßen Papier-Folien-Verbund verbunden.

Die eingesetzten Lacke erfüllen beispielsweise diese Eigenschaften: Heißsiegellack, Anti-Rutschlack, Schutzlack, Hitzeschutzlack, Peel-Lack, Antifog-Lack, Antistatik-Lack, wasserabweisende Lacke, Spritechte Lacke, Trennlacke, Überdrucklacke, Überschreibbare Lacke, Glanzlacke, Mattlacke, UV-Schutzlacke, Lichtschutzlacke, leitfähige Lacke, Barrierelacke etc. , oder eine entsprechende Beschichtung des erfindungsgemäßen Verbunds mit derartigen Lacksystemen.

Vor der Lackierung kann ein Primer eingesetzt werden, damit der Lack besser auf dem erfindungsgemäßen Verbund haftet.

Die Beschichtung / Lackierung kann auch eine Metallisierung darstellen, oder es kann ein Barrierelack sein. Wird als Barrierelack z.B. SiOx verwendet, so sollte diese Beschichtung zwischen 2 Folien liegen. Das ist auch bei Metallisierung zu empfehlen.

Bei der Verwendung von Druckfarben ist sehr darauf zu achten, dass über die Druckfarben oder auch Lacke möglichst keine Lösungsmittel oder andere migrierende Bestandteile in den erfindungsgemäß migrationsfreien Verbund mit eingetragen werden.

### Vergleichsbeispiele

Nachstehend werden als Vergleichsbeispiele bekannte Kaschierfolien wiedergegeben, welche für einen Einsatz im Rahmen eines erfindungsgemäßen Papier-Folie-Verbunds geeignet sind bzw. zum Einsatz kommen.

### Vergleichsbeispiel 1

### Kaschierfolie mit Peel (Schicht 7)

| Schichtnummer | Zusammensetzung | Anteil in Schicht in % | Dicke in µm |
|---|---|---|---|
| 1 Kaschierseite | • Lupolen 3010D | • 100 | 17,5 |
| 2 | • Admer NF498E | • 100 | 5 |
| 3 | • Durethan C38 F | • 100 | 5 |
| 4 | • EVALT101B | • 100 | 5 |
| 5 | • Durethan C38 F | • 100 | 5 |
| 6 | • Admer NF498E | • 100 | 5 |
| 7 Siegelseite | • Lupolen 3010 D • Polybuten-1 | • 90 • 10 | 17,5 |
| | | | Summe: 60 µm |

### Vergleichsbeispiel 2

### Kaschierfolie

| Schichtnummer | Zusammensetzung | Anteil in Schicht in % | Dicke in µm |
|---|---|---|---|
| 1 Kaschierseite | • Lupolen 3010D | • 100 | 22,5 |
| 2 | • Admer NF498E | • 100 | 5 |
| 3 | • Durethan C38 F | • 100 | 5 |
| 4 | • EVALT101B | • 100 | 5 |
| 5 | • Durethan C38 F | • 100 | 5 |
| 6 | • Admer NF498E | • 100 | 5 |
| 7 Siegelseite | • Lupolen 3010 D | • 100 | 22,5 |
| | | | Summe: 70 µm |

### Vergleichsbeispiel 3

### Kaschierfolie, geeignet für Thermokaschierung mit Peel in Schicht 7

| Schichtnummer | Zusammensetzung | Anteil in Schicht in % | Dicke in µm |
|---|---|---|---|
| 1 | • Lupolen 3010D | • 20 | 12,5 |
| Kaschierseite | • Exact 0201 | • 80 | |
| 2 | • Admer NF498E | • 100 | 5 |
| 3 | • Durethan C38 F | • 100 | 5 |
| 4 | • EVALT101B | • 100 | 5 |
| 5 | • Durethan C38 F | • 100 | 5 |
| 6 | • Admer NF498E | • 100 | 5 |
| 7 | • Lupolen 3010 D | • 90 | 12,5 |
| Siegelseite | • Polybuten-1 | • 10 | |
| | | | Summe: 50 µm |

### Vergleichsbeispiel 4

### Kaschierfolie, Thermokaschierfolie

| Schichtnummer | Zusammensetzung | Anteil in Schicht in % | Dicke in µm |
|---|---|---|---|
| 1 Kaschierseite | • Exact 0201 | • 100 | 30 |
| 2 | • Admer NF498E | • 100 | 10 |
| 3 | • Durethan C38 F | • 100 | 20 |
| 4 | • Admer NF498E | • 100 | 10 |
| 5 Siegelseite | • Lupolen 2420 F | • 100 | 30 |
| | | | Summe: 100 µm |

### Vergleichsbeispiel 5

### Kaschierfolie, geeignet für Thermokaschierung

| Schichtnummer | Zusammensetzung | Anteil in Schicht in % | Dicke in µm |
|---|---|---|---|
| 1 | • Lupolen 2420 F | • 50 | 30 |
| Kaschierseite | • Exact 0201 | • 50 | |
| 2 | • Admer NF498E | • 100 | 10 |
| 3 | • Durethan C38 F | • 100 | 20 |
| 4 | • Admer NF498E | • 100 | 10 |
| 5 Siegelseite | • Lupolen 2420 F | • 100 | 30 |
| | | | Summe: 100 µm |

### Vergleichsbeispiel 6

### Kaschierfolie, geeignet für Thermokaschierung

| Schichtnummer | Zusammensetzung | Anteil in Schicht in % | Dicke in µm |
|---|---|---|---|
| 1 | • Lupolen 2420 F | • 20 | 30 |
| Kaschierseite | • Affinity 1850 G | • 80 | |
| 2 | • Admer NF498E | • 100 | 10 |
| 3 | • Durethan C38 F | • 100 | 20 |
| 4 | • Admer NF498E | • 100 | 10 |
| 5 Siepelseite | • Lupolen 2420 F | • 100 | 30 |
| | | | Summe: 100 µm |

### Vergleichsbeispiel 7

### Kaschierfolie, geeignet für Thermokaschierung

| Schichtnummer | Zusammensetzung | Anteil in Schicht in % | Dicke in µm |
|---|---|---|---|
| 1 | • Lupolen 3010D | • 30 | 30 |
| Kaschierseite | • Exact 0201 | • 70 | |
| 2 | • Admer NF498E | • 100 | 10 |
| 3 | • Durethan C38 F | • 100 | 20 |
| 4 | • Admer NF498E | • 100 | 10 |
| 5 Siegelseite | • Lupolen 3010 D | • 100 | 30 |
| | | | Summe: 100 µm |

### Vergleichsbeispiel 8

### Kaschierfolie, geeignet für Thermokaschierung

| Schichtnummer | Zusammensetzung | Anteil in Schicht in % | Dicke in µm |
|---|---|---|---|
| 1 | • Lupolen 3010D | • 70 | 30 |
| Kaschierseite | • Exact 0201 | • 30 | |
| 2 | • Admer NF498E | • 100 | 10 |
| 3 | • Durethan C38 F | • 100 | 20 |
| 4 | • Admer NF498E | • 100 | 10 |
| 5 Siegelseite | • Lupolen 3010 D | • 100 | 30 |
| | | | Summe: 100 µm |

### Vergleichsbeispiel 9

### Kaschierfolie, geeignet für Thermokaschierung

| Schichtnummer | Zusammensetzung | Anteil in Schicht in % | Dicke in µm |
|---|---|---|---|
| 1 | • Moplen EP 240 H | • 30 | 30 |
| Kaschierseite | • Exact 0201 | • 70 | |
| 2 | • Admer NF 498 E | • 100 | 10 |
| 3 | • Durethan C38 F | • 100 | 20 |
| 4 | • Admer QB 510 E | • 100 | 10 |
| 5 | • Moplen EP 240 H | • 100 | 30 |
| | | | Summe: 100 µm |

### Vergleichsbeispiel 10

### Kaschierfolie, geeignet für Thermokaschierung

| Schichtnummer | Zusammensetzung | Anteil in Schicht in % | Dicke in µm |
|---|---|---|---|
| 1 | • Lupolen 2420 F | • 20 | 30 |
| Kaschierseite | • Engage 8450 | • 80 | |
| 2 | • Admer NF498E | • 100 | 10 |
| 3 | • Durethan C38 F | • 100 | 20 |
| 4 | • Admer NF498E | • 100 | 10 |
| 5 Siegelseite | • Lupolen 2420 F | • 100 | 30 |
| | | | Summe: 100 µm |

Alle Folien der Vergleichsbeispiele 1 bis 10 eignen sich für die Kaschierung gegen zumindest kontakttransparentes Papier. Diese Folien besitzen sehr hohe Kontakttransparenz der Note 1, in Ausnahmefällen der Note 2. Durch die Kaschierung und Verwendung eines Klebers wird diese Transparenz der Folie nicht oder nur unwesentlich beeinträchtigt.

### Beispiele

Die nachstehenden Beispiele zeigen mögliche Ausgestaltungen eines erfindungsgemäßen Papier-Folie-Verbunds:

### Beispiel 1

### Papier-Folie-Verbund, Oberfolie

### Schichtaufbau

| **Folie** | **Stärke in µm** |
|---|---|
| Durchsichtiges oder kontakttransparentes Papier: Glassine ECHO® Win (HT) von Glatfelter | 24 µ (31 g/qm) |
| PE vorbehandelt | 13 |
| Kleber | 2 |
| OPET | 12 |
| Kleber | 2 |
| PE/HV | 13 |
| PA | 2 |
| EVOH 32mol% | 2 |
| PA | 2 |
| HV / PE peel | 15 |
| Gesamtstärke : | **87 µ** |

Lieferant des Papiers: **Glatfelter Gernsbach GmbH Hoerdener Strasse 3-7, 76593 Gernsbach, Germany**

### Beispiel 2 a

### Papier-Folie-Verbund; tiefziehfähige Unterfolie; nicht (kontakt)transparent

### Schichtaufbau

| **Folie** | **Stärke in µm** |
|---|---|
| Papier; tiefziehfähig von Mondi | 350 µm (292 g/qm) |
| PE / HV | 15 |
| EVOH32mol% | 2 |
| HV / PE | 15 |
| | |
| Gesamtstärke : | **382** |

Aufbau des Papiers: Advantage Formable Papier AF 135 g, PE Extrusionskaschiert 11 g, AF 135 g, PE extrusionskaschiert 11 g (ergibt Summe 292 g/qm) - plus Hochbarrierefolie (32 my) ergibt 322 g/qm (mit Folie) bzw. eine Dicke von 382 my. AF bedeutet: Advantage Formable und bezeichnet das besondere Papier von Mondi. Es handelt sich um ein langfasriges Kraft-Papier.

### Beispiel 2 b:

### Muster: Unterfolie

### Schichtaufbau

| **Folie** | **Stärke in µm** | | | |
|---|---|---|---|---|
| Papier; tiefziehfähig von Mondi | 355 | | | |
| PE+HV | 18 | | | |
| EVOH | 3 | | | |
| HV+PE peel | 18 | | | |
| | | | | |
| | | | | |
| | | | | |
| | | | | |
| | | | | |
| Gesamtstärke: | **394** | | | |

Das Papier ist von Mondi auch unter dem Handelsnamen **perFORMing** erhältlich.

### Beispiel 3

### Papier-Folie-Verbund

| **Folie** | **Stärke in µm** |
|---|---|
| Durchsichtiges oder kontakttransparentes Papier, bedruckt: Glassine ECHO® **Win von Glatfelter** | 31 µ (40 g/qm) |
| PE | 10 |
| OPET | 12 |
| Kleber | 2 |
| PE+HV | 14 |
| PA | 2 |
| EVOH32mol% | 2 |
| PA | 2 |
| HV+PE peel | 16 |
| Gesamtstärke : | **91** |

### Beispiel 4

### Papier-Folie-Verbund

| **Folie** | **Stärke in µm** |
|---|---|
| Durchsichtiges oder kontakttransparentes Papier, bedruckt: Glassine ECHO® **Win von Glatfelter** | 27 µ (35 g/qm) |
| PE | 10 |
| OPET | 12 |
| Kleber | 2 |
| PE+HV | 14 |
| PA | 2 |
| EVOH32mol% | 2 |
| PA | 2 |
| HV+PE peel | 16 |
| Gesamtstärke : | **87** |

### Beispiel 5

### Papier-Folie-Verbund

| **Folie** | **Stärke in µm** |
|---|---|
| Durchsichtiges oder kontakttransparentes Papier, bedruckt: Grünperga Kristall Klar 40 g/qm | 36 µ (40 g/qm) |
| PE | 10 |
| OPET | 12 |
| Kleber | 2 |
| PE+HV | 14 |
| PA | 2 |
| EVOH32mol% | 2 |
| PA | 2 |
| HV+PE peel | 16 |
| Gesamtstärke : | 96 |

### Beispiel 6

### Papier-Folie-Verbund

| **Folie** | **Stärke in µm** |
|---|---|
| Durchsichtiges oder kontakttransparentes Papier, bedruckt: Grünperga Super Klar 32g/qm | 31 µ (32 g/qm) |
| PE | 10 |
| OPET | 12 |
| Kleber | 2 |
| PE+HV | 14 |
| PA | 2 |
| EVOH32mol% | 2 |
| PA | 2 |
| HV+PE peel | 16 |
| Gesamtstärke : | 91 |

### Beispiel 7

### Papier-Folie-Verbund, ; tiefziehfähige Unterfolie; nicht (kontakt)transparent

### Schichtaufbau

| **Folie** | **Stärke in µm** |
|---|---|
| Papier | |
| Billerud Fibre-Form® | 195 µ (150 g/qm) |
| APET | 152 |
| PE | 8 |
| PE+HV | 11 |
| EVOH32mol% | 4 |
| HV+PE | 10 |
| | |
| | |
| | |
| Gesamtstärke : | **380** |

Das eingesetzte Papier wird z.B. von BILLERUDKORSNÄS GERMANY GMBH vertrieben.

### Beispiel 8

### Papier-Folie-Verbund; Unterfolie; (kontakt)transparent; flach

### Schichtaufbau

| **Folie** | **Stärke in µm** |
|---|---|
| Durchsichtiges oder kontakttransparentes Papier, bedruckt: Glassine ECHO® **Win von Glatfelter** | 39 µ (50 g/qm) |
| APET | 350 |
| 2K LF Kleber | 2 |
| PE+HV | 11 |
| EVOH32mol% | 4 |
| HV+PE | 10 |
| | |
| | |
| | |
| Gesamtstärke : | **416** |

Beispiel 9: Die Folie aus Vergleichsbeispiel 7 (Dicke 100 µ) wurde auf der (Thermo)Kaschierseite 1 mit dem verwendeten Papier aus Beispiel 1 (24 µ, 31 g/qm) mittels Thermokaschierung zu einem Papier-Folie-Verbund verbunden.
Beispiel 10: Eine Verpackung mit der Oberfolie aus Beispiel 1 und der Unterfolie aus Beispiel 2.
Beispiel 11: Eine Verpackung mit der Oberfolie aus Beispiel 4 und der Unterfolie aus Beispiel 7.
Beispiel 12: Eine Verpackung (Skin) mit der Unterfolie aus Beispiel 8 und der handelsüblichen Skin-Folie der Buergofol GmbH, D-93354 Siegenburg Buergo.Skin HB Mono mit der Dicke 100 µ.

### Beschreibung:

Bei diesen Beispielen wurde Papier auf eine herkömmliche Oberfolie, d.h. auf einen Verbund von OPET gegen Barrierefolie, wie er im Rahmen herkömmlicher Lebensmittelverpackungen zum Einsatz kommt, aufgeklebt.

Die Erfindung ist darauf jedoch nicht beschränkt, sondern kann auch ohne einen OPET-Kaschierschritt ausgeführt werden.

### Werte für die Transparenz des Papiers und die Kontakttransparenz des Verbunds

| Beispiel | Verwendetes Papier und Grammatur des Papiers | Transparenz des Papiers nach DIN 53147 in % | Kontakttransparenz des Verbunds Papier-Folie | Verpacktes Produkt erkennbar? |
|---|---|---|---|---|
| 1 | Glatfelter Glassine ECHO® Win (HT) 31 g/qm | 85% | Note 1-2 | Ja, sehr gut |
| 2a | Mondi Perform (Advantage Formable), 292 g/qm | - | Note 6 | nein |
| 2b | Mondi Perform (Advantage Formable), 294 g/qm | - | Note 6 | nein |
| 3 | Glatfelter Glassine ECHO® Win (HT) 40 g/qm | 79% | Note 2 | Ja, sehr gut |
| 4 | Glatfelter Glassine ECHO® Win (HT) 35 g/qm | 82% | Note 1-2 | Ja, sehr gut |
| 5 | Grünperga Kristall Klar 40 g/qm | 80% | Note 1-2 | Ja, sehr gut |
| 6 | Grünperga Super Klar 32 g/qm | 85,5% | Note 1-2 | Ja, sehr gut |
| 7 | Billerud FibreForm® 150 g/qm | - | Note 6 | nein |
| 8 | Glatfelter Glassine ECHO® Win 50g/qm | 74% | Note 2-3 | Ja, gut |
| 9 | Glatfelter Glassine ECHO® Win (HT) 31 g/qm | 85% | Note 1-2 | Ja, sehr gut |
| 10 | Wie B1 und B2 | 85 % und 0 % | Oben: 1-2 Unten: 6 | Von oben: sehr gut. Von unten: nicht erkennbar |
| 11 | Wie B4 und B7 | 82 % und 0 % | Oben: 1-2 Unten: 6 | Von oben: sehr gut. |
| | | | | Von unten: nicht erkennbar |
| 12 | Wie B8 | 74% | Oben: 1 Unten: 2-3 | Von oben: sehr gut. Von unten: gut |

Die Beispiele zeigen, dass Verbunde aus (kontakt)transparentem Papier und Folie die optischen Eigenschaften für den Einsatz für Lebensmittelverpackungen erfüllen und sich durch eine ganze Reihe von Vorteilen gegenüber dem Stand der Technikauszeichnen.

Überraschend war dabei die sehr gute Erkennbarkeit des verpackten Produkts (für den Verbraucher). Dies war nicht zu erwarten, da der erfindungsgemäße Verbund ja nicht immer in Kontakt mit dem verpackten Produkt ist, wodurch sich ja erst höhere Transparenz ergeben würde.

## Patentansprüche

1. Papier-Folie-Verbund mit mindestens einer ersten, eine Folie umfassenden, Schicht und mindestens einer mit der mindestens ersten Schicht verbundenen zweiten, ein Papier umfassenden, Schicht, **dadurch gekennzeichnet, dass** der Papier- Folie-Verbund durchsichtig oder zumindest kontakttransparent ist.

2. Papier-Folie-Verbund mit mindestens einer ersten, ein Papier umfassenden, Schicht und mindestens einer mit der mindestens ersten Schicht verbundenen zweiten, eine Folie umfassenden, Schicht, **dadurch gekennzeichnet, dass** der Papier- Folie-Verbund durchsichtig oder zumindest kontakttransparent ist.

3. Papier-Folie-Verbund nach Anspruch 1 oder 2, **dadurch gekennzeichnet, dass** der Papier- Folie-Verbund derart tiefziehfähig ist, dass er zur Herstellung von tiefgezogenen Formmulden für Verpackungen einsetzbar ist.

4. Papier-Folie-Verbund nach einem der vorhergehenden Ansprüche, **dadurch gekennzeichnet, dass** die erste, eine Folie oder Papier umfassende, Schicht und / oder die zweite, ein Papier oder Folie umfassende, Schicht, jeweils an ihrer der jeweils anderen Schicht zugewandten Seite eine Peel-Beschichtung oder eine ähnlich wirkende Beschichtung aufweist / aufweisen, wodurch ein einfaches Lösen der ersten und zweiten Schichten voneinander ermöglicht wird.

5. Papier-Folie-Verbund nach einem der vorhergehenden Ansprüche, **dadurch gekennzeichnet, dass** die erste Schicht eine vorzugsweise sauerstoffundurchlässige Barrierefolie und / oder eine Mehrschichtfolie aufweist.

6. Papier-Folie-Verbund nach einem der vorhergehenden Ansprüche, **dadurch gekennzeichnet, dass** die Folie und/oder das Papier mit einem vorzugsweise sauerstoffundurchlässigen Barrierelack versehen ist.

7. Papier-Folie-Verbund nach einem der vorhergehenden Ansprüche, **dadurch gekennzeichnet, dass** mindestens eine Schicht bedruckt und / oder lackiert ist.

8. Papier-Folie-Verbund nach einem der vorhergehenden Ansprüche, **dadurch gekennzeichnet, dass** die erste und die zweite Schicht miteinander mittels Verklebung, und / oder Kaschierung, insbesondere Thermo- oder Extrusionskaschierung, miteinander verbunden sind.

9. Herstellung eines Papier-Folie-Verbunds nach einem der vorhergehenden Ansprüche, **dadurch gekennzeichnet, dass** der Papier-Folie-Verbund mittels Verklebung und / oder Kaschierung, insbesondere Thermo- oder Extrusionskaschierung, hergestellt wird.

10. Verwendung eines Papier-Folie-Verbunds nach einem der vorhergehenden Ansprüche zur Herstellung einer Verpackung, insbesondere einer Verpackung für Lebensmittel.

11. Verpackung, insbesondere Verpackung für Lebensmittel, **dadurch gekennzeichnet, dass** die Verpackung einen Papier-Folie-Verbund nach einem der Ansprüche 1 bis 8 aufweist.

12. Verpackung nach Anspruch 11, **dadurch gekennzeichnet, dass** der Papier-Folie-Verbund als vorzugsweise tiefgezogenes Unterteil und / oder als Oberteil der Verpackung eingesetzt wird.

13. Verpackung nach Anspruch 11 oder 12, **dadurch gekennzeichnet, dass** der Papier-Folie-Verbund als Oberteil der Verpackung eingesetzt wird und als Unterteil ein tiefziehfähiger Verbund bestehend nur aus Folie verwendet wird.

14. Verpackung nach einem der Ansprüche 11 oder 13, **dadurch gekennzeichnet, dass** das Unterteil und das Oberteil der Verpackung miteinander über eine Peel-Beschichtung verbunden sind, wodurch ein einfaches Lösen des Oberteils der Verpackung von dem Unterteil der Verpackung ermöglicht wird.

15. Herstellung einer Verpackung nach einem der Ansprüche 11 bis 14, umfassend den Schritt:
- Ausbilden eines Unterteils einer Verpackung in Form einer Formmulde zur Aufnahme eines Verpackungsguts vorzugsweise mittels Tiefziehens aus einem Papier-Folie-Verbund gemäß eines der Ansprüche 1 bis 8 oder in Form eines Tabletts aus einem Papier-Folie-Verbund gemäß eines der Ansprüche 1 bis 8, und / oder
- Aufbringen eines Papier-Folie-Verbunds gemäß eines der Ansprüche 1 bis 8 als Oberteil auf ein Unterteil einer Verpackung.

16. Herstellung einer Verpackung nach einem der Ansprüche 11 bis 14, umfassend den Schritt:
- Ausbilden eines Unterteils einer Verpackung in Form einer Formmulde zur Aufnahme eines Verpackungsguts vorzugsweise mittels Tiefziehens aus einem Folien-Verbund, und / oder
- Aufbringen eines Papier-Folie-Verbunds gemäß eines der Ansprüche 1 bis 8 als Oberteil auf ein Unterteil einer Verpackung.

17. Herstellung einer Verpackung nach Anspruch 15 oder 16, **dadurch gekennzeichnet, dass** das Unterteil der Verpackung aus einem Papier-Folie-Verbund gemäß eines der Ansprüche 1 bis 8 ausgebildet wird und das Oberteil der Verpackung aus einer Skin-Folie ausgebildet wird.
